# EUROPÄISCHE PATENTSCHRIFT

(11) **EP 2 226 214 B1**
(45) Veröffentlichungstag und Bekanntmachung des Hinweises auf die Patenterteilung: **05.10.2011**
(21) Anmeldenummer: 10006655.4
(22) Anmeldetag: 14.12.2007
(51) Int. Cl.: B60K 31/00, B62D 1/08

(54) **Lenkrad für ein Kraftfahrzeug und Kraftfahrzeug**
Steering wheel for a vehicle and vehicle
Volant pour un automobile et automobile

(30) Priorität: 21.12.2006 DE 102006060554
(43) Veröffentlichungstag der Anmeldung: 08.09.2010
(62) Teilanmeldung aus: 07856720.3
(73) Patentinhaber: Bayerische Motoren Werke, 80809 München (DE)
(72) Erfinder: Eckstein, Lutz, 52066 Aachen (DE); Fuchs, Dietmar, 85591 Vaterstetten (DE)

(56) Entgegenhaltungen:
- DE-A1-102005 012 715
- DE-A1-102005 036 923

## Beschreibung

Die Erfindung betrifft ein Lenkrad für ein Kraftfahrzeug mit Bedienelementen zur Steuerung zumindest eines längsdynamischen Regelsystems des Kraftfahrzeugs.

Ferner betrifft die Erfindung ein Kraftfahrzeug mit einem solchen Lenkrad.

In modernen Kraftfahrzeugen werden zunehmend längsdynamische Regelsysteme eingesetzt. Bekannt sind beispielsweise reine Fahrgeschwindigkeitsregelsysteme (Tempomat), Fahrgeschwindigkeitsregelsysteme mit Bremsfunktion, Abstandsregeltempomaten (z.B. ACC - adaptive cruise control) und Geschwindigkeits-Begrenzer.

Zur Bedienung solcher längsdynamischer Regelsysteme sind typischerweise entweder Bedienelemente am Lenkrad des Kraftfahrzeugs oder Lenkstockschalter vorgesehen. Die bekannten Bedienkonzepte bergen jedoch noch verschiedene Nachteile. Beispielsweise kann ein Lenkstockhebel, welcher zur Bedienung eines längsdynamische Regelsystems vorgesehen ist, mit einem anderen Lenkstockhebel (z.B. Blinker- bzw. Wischerhebel) verwechselt werden. Dies gilt insbesondere, wenn keine Beschriftung oder sonstige Kennzeichnung des Lenkstockhebels vorgesehen ist und/oder diese aus der Blickrichtung des Fahrers oder mangels ausreichender Beleuchtung nicht erkennbar ist. Aufgrund des beschränkten am Lenkrad verfügbaren Bauraums sowie aus ästhetischen und ergonomischen Gründen werden an einem Lenkrad in der Regel nur wenige Bedienelemente zur Bedienung längsdynamischer Regelsysteme angeordnet. Dadurch ist der Umfang der durch Betätigung dieser Bedienelemente erzeugbaren Bedienkommandos in der Regel eng begrenzt.

Die nachveröffentlichte und somit als Stand der Technik nach Artikel 54 (3) EPÜ zu betrachtende europäische Patentanmeldung EP 1 922 222 A1 offenbart eine Bedieneinrichtung für ein Fahrerassistenzsystem eines Kraftfahrzeugs mit einem Regler zur Regelung der Beschleunigung des Kraftfahrzeugs gemäß einer Sollbeschleunigung. Die Bedieneinrichtung besitzt ein an einem Lenkrad des Kraftfahrzeugs angeordnetes Beschleunigungs-Bedienelement zur Eingabe einer vom Fahrer des Kraftfahrzeugs vorgebbaren auf den Regler wirkenden Zusatzbeschleunigung sowie ein ebenfalls an dem Lenkrad angeordnetes Geschwindigkeits-Bedienelement. Gemäß einer Ausführungsform der EP 1 922 222 A1 sind das Beschleunigungs-Bedienelement und das Geschwindigkeits-Bedienelement jeweils als Rändelrad oder Rolle ausgeführt.

Eine Aufgabe der Erfindung ist es, ein Lenkrad für ein Kraftfahrzeug zu schaffen, welches Bedienelemente aufweist, mittels welcher eine verbesserte Bedienung eines längsdynamischen Regelsystems ermöglicht wird.

Ferner ist es eine Aufgabe der Erfindung, ein Kraftfahrzeug zu schaffen mit einem Lenkrad, welches Bedienelemente aufweist, mittels welcher eine verbesserte Bedienung eines längsdynamischen Regelsystems ermöglicht wird.

Gelöst wird die erstgenannte Aufgabe durch ein Lenkrad mit den Merkmalen des unabhängigen Anspruchs 1. Vorteilhafte Ausführungsformen und Weiterbildungen der Erfindung ergeben sich aus den abhängigen Ansprüchen 2 bis 8.

Die zweitgenannte Aufgabe wird gelöst durch ein Kraftfahrzeug mit den Merkmalen des Anspruchs 9. Vorteilhafte Ausführungsformen und Weiterbildungen der Erfindung ergeben sich aus den abhängigen Ansprüchen 10 bis 14.

Erfindungsgemäß sind an einem Lenkrad für ein Kraftfahrzeug Bedienelemente zur Steuerung zumindest eines längsdynamischen Regelsystems des Kraftfahrzeugs angeordnet. Diese Bedienelemente umfassen ein Einstellelement zur Veränderung eines Setzgeschwindigkeitswerts für das zumindest eine längsdynamische Regelsystem. Das Einstellelement ist in zwei entgegengesetzten Betätigungsrichtungen betätigbar, um durch die Betätigungsrichtung eine Richtung der Veränderung des Setzgeschwindigkeitswerts vorzugeben. Insbesondere kann durch ein Verdrehen oder Verschieben in einer ersten Richtung der Setzgeschwindigkeitswert erhöht werden, während er in der entgegengesetzten Richtung verringert wird. Das Einstellelement ist zudem in jeder der beiden Betätigungsrichtungen hinsichtlich des Ausmaßes der Betätigung in zumindest zwei Stufen betätigbar. Beispielsweise kann das Einstellelement so ausgeführt sein, dass es sich in jeder Richtung über einen ersten für den betätigenden Fahrer fühlbaren Druckpunkt hinweg bis zu einem zweiten fühlbaren Druckpunkt, der vorteilhaft gleichzeitig als mechanischer Anschlag realisiert sein kann, verschieben oder verdrehen lässt. Erfindungsgemäß dient die hinsichtlich des Ausmaßes der Betätigung für jede der beiden Betätigungsrichtungen mehrstufige, insbesondere zweistufige, Bediencharakteristik dazu, ein Ausmaß der durch die Betätigung des Einstellelements kommandierten Veränderung des Setzgeschwindigkeitswerts vorzugeben.

Ein wie oben beschrieben konzipiertes Einstellelement nimmt am Lenkrad bei geeigneter Ausführung wenig Bauraum ein, erweitert jedoch gegenüber dem Stand der Technik die Vielfalt der dem Fahrer über die Betätigung von Lenkrad-Bedienelementen zur Verfügung stehenden Bedienkommandos. Es kann dem Fahrer durch das Vorsehen eines einziges Bedienelements die Möglichkeit zur Erzeugung einer Vielzahl von Bedienkommandos gegeben werden.

Die erfindungsgemäße Betätigbarkeit in zwei entgegengesetzten Richtungen wird vom Bediener intuitiv als Möglichkeit zur Steigerung und Herabsetzung der Setzgeschwindigkeit begriffen. Die mehrstufige Betätigbarkeit in jeder Richtung wird ebenso intuitiv derart begriffen, dass eine "höhere" Stufe der Betätigung eine "stärkere" Reaktion zur Folge hat. Dieser Effekt kann noch verstärkt werden, wenn der Bediener bei der Betätigung eine geeignete haptische Rückmeldung erfährt. Etwa kann zum Erreichen einer "höheren" Stufe das Überwinden eines Druck- bzw. Einrastpunkts erforderlich sein oder es kann die Notwendigkeit zum besonders kräftigen Andruck bestehen. Eine solche haptische Rückmeldung kann auch aktiv durch einen dem Einstellelement zugeordneten Aktuator erzeugt werden. So kann die erforderliche Andruckkraft oder die Spürbarkeit eines Druckpunktes situationsabhängig variiert werden (z.B. abhängig von der aktuellen Fahrgeschwindigkeit). Auch können spezielle haptische Effekte (z.B. Vibrieren des Einstellelements) dargestellt werden, um weitere Information an den Fahrer auszugeben, etwa ihn auf ein Sicherheitsrisiko hinzuweisen, das mit der Reaktion des Kraftfahrzeugs auf eine Betätigung des Einstellelements in einem bestimmten Ausmaß verbunden ist.

Das Ausmaß der Veränderung der Setzgeschwindigkeit kann den Stufen des Betätigungsausmaßes geeignet zugeordnet werden. Beispielsweise kann die Betätigung in einem ersten geringen Ausmaß (z.B. Betätigung nur bis zu einem ersten fühlbaren Druckpunkt, ohne diesen zu überschreiten) zu einer Erhöhung bzw. Verringerung der Setzgeschwindigkeit um 1 km/h bzw. 1 mph dienen, während die Betätigung in einem zweiten höheren Ausmaß (z.B. Überschreiten des oben genannten ersten fühlbaren Druckpunkts und weitere Betätigung bis zu einem zweiten fühlbaren Druckpunkt) zur Erhöhung bzw. Verringerung der Setzgeschwindigkeit um 10 km/h bzw. 10 mph dient.

Statt der obigen Einer- und Zehner-Schritte können selbstverständlich beliebige andere Schrittweiten vorgegeben werden. Vorteilhaft ist eine größere Veränderung der Setzgeschwindigkeit bei größerem Ausmaß der Betätigung.

Statt, wie oben beschrieben, nur zwei Stufen des Ausmaßes der Betätigung können selbstverständlich auch noch mehr Stufen unterschieden werden. Denkbar sind beispielsweise Schritte der Ausmaße 1 km/h, 5 km/h und 10 km/h bei einer dreistufigen Charakteristik in einer oder sogar beiden Betätigungsrichtungen.

Denkbar ist auch, dass in Abhängigkeit vom Ausmaß der Betätigung des Einstellelements die Reglereinstellungen, insbesondere eine Reglerverstärkung, des längsdynamischen Regelsystems, auf welches sich die veränderte Setzgeschwindigkeit bezieht, verändert werden. So kann etwa erreicht werden, dass bei Betätigung im Ausmaß einer ersten Stufe langsam bzw. weich auf die veränderte Setzgeschwindigkeit geregelt wird, während bei Betätigung im Ausmaß einer zweiten Stufe schnell bzw. steif auf die veränderte Setzgeschwindigkeit geregelt wird. Der Fahrer kann somit je nach Ausmaß der Betätigung wahlweise ein komfortableres oder ein sportlicheres Beschleunigungs- bzw. Entschleunigungsverhalten des Kraftfahrzeugs vorgeben. Insbesondere kann der höchsten Stufe des Betätigungsausmaßes eine veränderte, insbesondere eine steifere, Reglereinstellung des längsdynamischen Regelsystems zugeordnet werden. So kann etwa bei einer zweistufigen Betätigungscharakteristik des Einstellelements die erste Stufe zu einer geringen Geschwindigkeitsveränderung (z.B. um 1 km/h) bei "weicher" Reglereinstellung dienen, während die zweite Stufe zu einer größeren Geschwindigkeitsveränderung (z.B. um 10 km/h) bei "steifer" Reglereinstellung dient. Wünscht der Fahrer eine große Geschwindigkeitsveränderung bei "weicher" Reglereinstellung, so kann er auch dies kommandieren, indem er das Einstellelement mehrmals oder langanhaltend in der ersten Stufe betätigt.

Besonders vorteilhaft kann es sein, wenn zumindest zwei unterscheidbaren Stufen des Ausmaßes der Betätigung unterschiedliche Einstellungen hinsichtlich des Einsatzes der Bremsen des Kraftfahrzeugs zugeordnet sind. Im Hinblick auf die Entschleunigung des Fahrzeugs kann die Bedienlogik dann vorteilhaft so ausgeführt werden, dass eine Betätigung im Ausmaß einer ersten Stufe lediglich dazu führt, dass das Kraftfahrzeug ausschließlich aufgrund von Reibung und Luftwiderstand, jedoch ohne aktiven Bremseingriff, langsam seine Geschwindigkeit verringert, während eine Betätigung im Ausmaß einer zweiten Stufe einen aktiven Bremseingriff des Fahrzeugs zur Folge hat, um die Geschwindigkeit des Fahrzeugs noch schneller zu verringern als bei Betätigung im Ausmaß der ersten Stufe. Die intuitive Bedienbarkeit ist auch und besonders bei einer solchen Umsetzung der Erfindung gegeben, da der Fahrer erwartet, dass auf eine Betätigung in "höherem" Ausmaß eine "stärkere" Fahrzeugreaktion folgt, was durch den aktiven Bremseingriff gegeben ist.

Eine erweiterte Bedienbarkeit des längsdynamischen Regelsystems des Kraftfahrzeugs kann insbesondere erreicht werden bei einer zumindest dreistufigen Betätigungscharakteristik des Einstellelements. Dann kann etwa die erste Stufe zu einer geringen Geschwindigkeitsveränderung (z.B. um 1 km/h) bei "weicher" Reglereinstellung dienen, die zweite Stufe zu einer größeren Geschwindigkeitsveränderung (z.B. um 10 km/h) bei ebenfalls "weicher" Reglereinstellung und die dritte Stufe zu einer Geschwindigkeitsveränderung, deren Ausmaß gleich dem Ausmaß der Geschwindigkeitsveränderung der zweiten Stufe ist, die jedoch bei "steifer" Reglereinstellung und somit sportlicherer Fahrdynamik umgesetzt wird. In diesem Beispiel ist das Ausmaß der Geschwindigkeitsveränderung der dritten Stufe exemplarisch gleich dem Ausmaß der Geschwindigkeitsveränderung der zweiten Stufe gewählt. Dies ist besonders vorteilhaft, da dann ein Übergang von der zweiten zur dritten Stufe vom Fahrer bewusst als ausschließlich auf eine Veränderung der Fahrdynamik gerichtete Bedienaktion vorgenommen werden kann. Grundsätzlich ist aber auch eine Zuordnung eines anderen Ausmaßes der Geschwindigkeitsveränderung zur dritten Stufe denkbar, welches sich von dem der zweiten Stufe unterscheidet, insbesondere größer (z.B. 20 km/h) ist.

Vorzugsweise sind die Bedienelemente innerhalb des Lenkradkranzes des Lenkrad angeordnet. Diese Anordnung hat sich auch bei aus dem Stand der Technik bekannten Systemen bewährt. Insbesondere, wenn die Bedienelement nahe des Lenkradkranzes auf einer Speiche des Lenkrads angeordnet sind, kann sie der Fahrer während des Fahrens bequem mit dem Daumen betätigen, ohne den Lenkradkranz loslassen zu müssen. Für eine bequeme Betätigung mit dem Daumen des Fahrers ist das Einstellelement vorzugsweise derart ausgeführt und am Lenkrad angeordnet, dass eine Betätigung im Wesentlichen translatorisch und in zum Lenkradkranz im Wesentlichen paralleler Richtung erfolgen kann. Wenn das Einstellelement in etwa auf einer "3 Uhr"-Position oder einer "9 Uhr"-Position am Lenkrad angeordnet ist, ergibt sich daraus eine Betätigung im Wesentlichen nach oben und unten. Eine Betätigung in solcher Richtung wird vom Fahrer intuitiv mit einer Beschleunigung (Betätigung nach oben) bzw. einer Entschleunigung (Betätigung nach unten) des Fahrzeugs assoziiert.

Das Einstellelement kann wahlweise so ausgeführt sein, dass es eine rotatorische oder eine translatorische Betätigung in entgegengesetzten Betätigungsrichtungen erlaubt. Die genannten entgegengesetzten Betätigungsrichtungen des Einstellelements können also entgegengesetzte Verschieberichtungen oder entgegengesetzte Drehrichtungen sein.

Besonders vorteilhaft erscheint eine Umsetzung des Einstellelements als in zwei Drehrichtungen jeweils mehrstufig ausgeprägte Drehwippe. Die oben beschriebenen Merkmale der Erfindung lassen sich durch eine solche Drehwippe einfach, kostengünstig und kompakt umsetzen.

Ausführungsformen der Erfindung, welche je Betätigungsrichtung die Unterscheidung von maximal zwei Stufen des Ausmaßes der Betätigung erfordern, lassen sich mit einer in zwei Drehrichtungen jeweils zweistufig ausgeprägten Drehwippe als Einstellelement im Sinne der Erfindung besonders einfach, kostengünstig und kompakt umsetzen.

Gemäß der Erfindung umfassen die bei dem Lenkrad vorgesehenen Bedienelemente zumindest ein getrennt von dem Einstellelement ausgeführtes Vorwahlelement zur Vorwahl eines von mehreren längsdynamischen Regelsystemen des Kraftfahrzeugs.

Das Vorwahlelement kann beispielsweise ganz einfach als Druckknopf oder Drucktaster ausgeführt sein. Diese Weiterbildung der Erfindung erlaubt eine besonders gute Ausnutzung der übrigen Bedienelemente am Lenkrad, sofern sie auf die Bedienung typischer Funktionen längsdynamischer Regelsysteme bezogen sind. Insbesondere erlaubt diese Weiterbildung der Erfindung eine besonders gute Ausnutzung eines mehrstufigen Einstellelements der oben beschriebenen Art.

Das Vorsehen eines solchen Vorwahlelements basiert auf der Überlegung, dass die Bedienung verschiedener längsdynamischer Regelsysteme (z.B. ACC und herkömmlicher Tempomat) im Wesentlichen ähnliche bzw. teilweise sogar dieselben Bedienkommandos impliziert. Beispielsweise wird für beide Systeme typischerweise eine Setzgeschwindigkeit eingestellt. Gemäß der vorliegenden Weiterbildung der Erfindung werden nun für vergleichbare Bedienkommandos, die an unterschiedliche längsdynamische Regelsysteme gerichtet sind, dieselben Bedienelemente verwendet - insbesondere dasselbe erfindungsgemäß bidirektional und mehrstufig ausgeführte Einstellelement. Das gemäß der vorliegenden Weiterbildung der Erfindung zusätzlich vorgesehene Vorwahlelement erlaubt es dem Bediener festzulegen, auf welches längsdynamische Regelsystem sich seine Bedienkommandos beziehen.

Das Einstellelement bzw. die übrigen Bedienelemente können somit zur Bedienung aller durch das Vorwahlelement vorwählbaren längsdynamischen Regelsysteme des Kraftfahrzeugs dienen und müssen nicht für jedes einzelne längsdynamische Regelsysteme gesondert vorgesehen werden. Zudem kann die Bedienung durch den Fahrer intuitiver erfolgen, wenn er für ähnliche Bedienaktionen stets dieselben Bedienelemente verwendet und nicht etwa zunächst überlegen muss, welche Bedienelemente für das aktuell aktivierte längsdynamische Regelsysteme zu verwenden sind.

Die oben beschriebene Weiterbildung der Erfindung kann im Hinblick auf die Verwendung des Einstellelements gesamthaft umgesetzt werden durch ein mit einem Lenkrad nach einer der oben beschriebenen Ausführungsformen der Erfindung ausgestattetes Kraftfahrzeug, bei dem mehrere längsdynamische Regelsysteme vorgesehen sind, die jeweils in Abhängigkeit von einem Setzgeschwindigkeitswert betreibbar sind, wobei die an dem Lenkrad angeordneten Bedienelemente zumindest ein getrennt von dem Einstellelement ausgeführtes Vorwahlelement umfassen, durch dessen Betätigung eines der mehreren längsdynamischen Regelsysteme vorwählbar ist, und wobei im Fall der Vorwahl eines ersten längsdynamischen Regelsystems das Einstellelement zur Veränderung des Setzgeschwindigkeitswerts für dieses erste Regelsystem dient, wohingegen es im Fall der Vorwahl eines zweiten längsdynamischen Regelsystems zur Veränderung des Setzgeschwindigkeitswerts für dieses zweite Regelsystem dient.

Im Hinblick auf die Verwendung weiterer Bedienelemente kann es - sofern bei dem Kraftfahrzeug zumindest zwei längsdynamische Regelsysteme jeweils in Abhängigkeit von zumindest einer weiteren Bedieneingabe betreibbar sind - besonders vorteilhaft sein, wenn die an dem Lenkrad vorgesehenen Bedienelemente zumindest ein getrennt von dem Einstellelement und dem Vorwahlelement ausgeführtes weiteres Bedienelement umfassen, mittels welchem im Fall der Vorwahl des ersten längsdynamischen Regelsystems zumindest eine weitere Bedieneingabe betreffend das erste Regelsystem vornehmbar ist, wohingegen im Fall der Vorwahl des zweiten längsdynamischen Regelsystems mittels dieses weiteren Bedienelements zumindest eine weitere Bedieneingabe betreffend das zweite Regelsystem vornehmbar ist.

Die an dem Lenkrad angeordneten Bedienelemente müssen für eine solche Ausführungsform bzw. Weiterbildung der Erfindung zumindest ein getrennt von dem Einstellelement und dem Vorwahlelement ausgeführtes weiteres Bedienelement zur Vornahme einer weiteren Bedieneingabe umfassen.

Im einfachsten Fall beziehen sich die Eingaben des Einstellelements und/oder des weiteren Bedienelements jeweils auf sämtliche längsdynamischen Regelsysteme des Kraftfahrzeugs.

Denkbar und ebenfalls vorteilhaft sind aber auch Konfigurationen, bei welchen durch das Vorwahlelement eines von drei längsdynamischen Regelsystemen A, B und C vorwählbar ist und bei welchen das Einstellelement zur Einstellung einer Setzgeschwindigkeit bei A und B (nicht aber bei C) dient, während das weitere Bedienelement für Eingaben mit Bezug auf B und C (nicht aber mit Bezug auf A) dient. Ferner ist es denkbar, ein weiteres Bedienelement lediglich im Fall der Vorwahl des längsdynamischen Regelsystems C mit einer Funktion zu hinterlegen. Beispielsweise kann die Bedienlogik so konzipiert sein, dass eine Taste zur Festlegung eines Abstands zu einem vorausfahrenden Fahrzeug nur dann mit einer Funktion hinterlegt ist, wenn durch das Vorwahlelement ein längsdynamisches Regelsystem vorgewählt ist, welches einen Wert des Abstands zu einem vorausfahrenden Fahrzeug berücksichtigt und/oder beeinflusst.

Alternativ zur oben beschriebenen Weiterbildung der Erfindung kann ein Vorwahlelement gemäß einer anderen Weiterbildung der Erfindung mit den gleichen Vorteilen auch zur Vorwahl eines von mehreren Betriebsmodi eines längsdynamischen Regelsystems des Kraftfahrzeugs dienen. Diese Weiterbildung der Erfindung basiert auf einer ähnlichen Überlegung wie die zuvor beschriebene. Auch die Bedienung eines längsdynamischen Regelsystems in verschiedenen Betriebsmodi impliziert im Wesentlichen ähnliche bzw. teilweise sogar dieselben Bedienkommandos. Für die Eingabe dieser Bedienkommandos lassen sich dieselben Bedienelemente, insbesondere dasselbe erfindungsgemäß bidirektional und mehrstufig ausgeführte Einstellelement, nutzen, wenn die an dem Lenkrad angeordneten Bedienelemente zumindest ein getrennt von dem Einstellelement ausgeführtes Vorwahlelement zur Vorwahl eines von mehreren Betriebsmodi des entsprechenden längsdynamischen Regelsystems umfassen.

Diese alternative Weiterbildung der Erfindung kann im Hinblick auf die Verwendung des Einstellelements gesamthaft umgesetzt werden durch ein mit einem Lenkrad nach einer der oben beschriebenen Ausführungsformen der Erfindung ausgestattetes Kraftfahrzeug, bei dem zumindest ein längsdynamisches Regelsystem des Kraftfahrzeugs in mehreren unterschiedlichen Betriebsmodi jeweils in Abhängigkeit von einem Setzgeschwindigkeitswert betreibbar ist, wobei die Bedienelemente zumindest ein getrennt von dem Einstellelement ausgeführtes Vorwahlelement umfassen, durch dessen Betätigung einer der mehreren Betriebsmodi vorwählbar ist, und wobei im Fall der Vorwahl eines ersten Betriebsmodus das Einstellelement zur Veränderung des Setzgeschwindigkeitswerts für diesen ersten Betriebsmodus dient, wohingegen es im Fall der Vorwahl eines zweiten Betriebsmodus zur Veränderung des Setzgeschwindigkeitswerts für diesen zweiten Betriebsmodus dient.

Im Hinblick auf die Verwendung weiterer Bedienelemente kann es - sofern das zumindest eine bei einem erfindungsgemäßen Kraftfahrzeug vorgesehene längsdynamische Regelsystem in zumindest zwei unterschiedlichen Betriebsmodi jeweils in Abhängigkeit von zumindest einer weiteren Bedieneingabe betreibbar ist - besonders vorteilhaft sein, wenn die an dem Lenkrad vorgesehenen Bedienelemente zumindest ein getrennt von dem Einstellelement und dem Vorwahlelement ausgeführtes weiteres Bedienelement umfassen, mittels welchem im Fall der Vorwahl des ersten Betriebsmodus zumindest eine weitere Bedieneingabe betreffend den ersten Betriebsmodus vornehmbar ist, wohingegen im Fall der Vorwahl des zweiten Betriebsmodus mittels dieses weiteren Bedienelements zumindest eine weitere Bedieneingabe betreffend den zweiten Betriebsmodus vornehmbar ist.

Gemäß einer vorteilhaften Ausführungsform der Erfindung sind das Einstellelement und das Vorwahlelement sowie gegebenenfalls ein weiteres Bedienelement im Sinne der obigen Beschreibung räumlich benachbart auf derselben Seite (z.B. auf der linken Seite) des Lenkrads bezüglich dessen Mittelachse angeordnet, wobei sich die Anordnung im Speziellen dadurch auszeichnet, dass auf der bezüglich der Mittelachse des Lenkrads anderen Seite (dementsprechend z.B. auf der rechten Seite) ausschließlich Eingabeelemente ohne Bezug zu einem längsdynamischen Regelsystem des Kraftfahrzeugs angeordnet sind. Gemäß einer solchen Ausführungsform der Erfindung schlägt sich also eine funktionale Klassifizierung der am Lenkrad vorgesehenen Bedienelemente in deren räumlicher Anordnung am Lenkrad nieder. Der Bediener findet sich somit besonders einfach bei der Bedienung zurecht. Besonders konsequent ist die Umsetzung dieses Gedankens, wenn auf der Seite, auf welcher Einstellelement und Vorwahlelement angeordnet sind, keinerlei Eingabeelemente ohne Bezug zu einem längsdynamischen Regelsystem des Kraftfahrzeugs angeordnet sind.

Eine weitere Unterstützung des Zurechtfindens des Bedieners hinsichtlich seiner Interaktion mit Anzeige- und Bedienelementen ergibt sich, wenn die räumliche Anordnung der Bedienelemente am Lenkrad abgestimmt ist auf die räumliche Anordnung der entsprechenden Anzeigeelemente. Oben wurde bereits beschrieben, dass die Bedienelemente je nachdem, ob ein Bezug zu einem längsdynamischen Regelsystem besteht, auf der linken oder rechten Lenkradseite angeordnet werden können. Stehen in dem Kraftfahrzeug nun mehrere seitlich gegeneinander versetzte Anzeigeflächen zur Verfügung, um Informationen mit Bezug zu einem längsdynamischen Regelsystem auszugeben, so ist es besonders vorteilhaft, für diese Ausgabe eine Anzeigefläche zu verwenden, die vom Bediener intuitiv räumlich mit den Bedienelementen assoziiert wird. Sofern eine solche Anzeigefläche nicht ohnehin zur Verfügung steht, ist es vorteilhaft, eine Anzeigefläche derart angeordnet vorzusehen und entsprechend zu verwenden.

In einem einfachen Fall weist ein Kombiinstrument zwei nebeneinander angeordnete Rundinstrumente mit jeweils integrierter Anzeigefläche auf. Das Lenkrad des Kraftfahrzeugs weist auf der linken Seite eine Gruppe von Bedienelemente mit Bezug zu längsdynamischen Regelsystemen auf, auf der rechten Seite hingegen nur Bedienelemente ohne Bezug zu längsdynamischen Regelsystemen. Optische Anzeigen mit Bezug zu den längsdynamischen Regelsystemen erscheinen dann zweckmäßigerweise nur auf der Anzeigefläche im linken Rundinstrument. Die Zuordnung fällt dem Bediener bei einer solchen Ausführungsform der Erfindung in mehrerlei Hinsicht leicht. Bedient der Fahrer die Bedienelemente auf der linken Seite, so wird er eine zugehörige Anzeige intuitiv ebenfalls auf der linken Seite suchen - und bei der beschriebenen Ausführungsform auch finden. Findet der Bediener eine optische Anzeige auf der Anzeigefläche im linken Rundinstrument vor, so wird er intuitiv versuchen, eine darauf bezogene Bedienaktion mit Bedienelementen auf derselben Seite zu bewerkstelligen.

Eine gesamthafte Umsetzung des beschriebenen Gedankens sieht also vorzugsweise vor, dass bei einem Lenkrad für ein Kraftfahrzeug ein Einstellelement der beschriebenen Art und ein Vorwahlelement der beschriebenen Art sowie gegebenenfalls weitere Bedienelemente räumlich benachbart auf (bezüglich der Mittelachse des Lenkrads) derselben Seite angeordnet sind, während auf der anderen Seite ausschließlich Eingabeelemente ohne Bezug zu einem längsdynamischen Regelsystem des Kraftfahrzeugs angeordnet sind, und dass bei dem Kraftfahrzeug ein Kombiinstrument mit zwei auf unterschiedlichen Seiten bezüglich der Mittelachse des Kombiinstruments angeordneten Anzeigeflächen vorgesehen ist, wobei auf längsdynamische Regelsysteme des Kraftfahrzeugs bezogene optische Informationen im Wesentlichen (oder bei besonders vorteilhafter Ausführung sogar ausschließlich) auf derjenigen Anzeigefläche ausgegeben werden, die bezüglich der Mittelachse des Kombiinstruments auf derjenigen Seite angeordnet ist, auf der das Einstellelement und das Vorwahlelement bezüglich der Mittelachse des Lenkrads angeordnet sind.

Alternativ zur Erfindung gemäß den vorliegenden Patentansprüchen kann eine erweiterte Bedienbarkeit eines längsdynamischen Regelsystems für ein Kraftfahrzeug erreicht werden, wenn am Lenkrad des Kraftfahrzeugs ein Eingabeelement vorgesehen wird, welches dem Eingabeelement im Sinne der Erfindung gemäß dem vorliegenden Patentanspruch 1 insofern entspricht, als es in zwei entgegengesetzten Betätigungsrichtungen betätigbar ist, um durch die Betätigungsrichtung eine Richtung der Veränderung eines Setzgeschwindigkeitswerts des längsdynamischen Regelsystems vorzugeben, und welches in zumindest einer Betätigungsrichtungen hinsichtlich des Ausmaßes der Betätigung in mehreren Stufen betätigbar ist, um durch das Ausmaß der Betätigung zumindest ein das Reglerverhalten, insbesondere die Steifigkeit, des längsdynamischen Regelsystems vorzugeben. Es werden also in Abhängigkeit vom Ausmaß der Betätigung die Reglereinstellungen, insbesondere eine Reglerverstärkung, des längsdynamischen Regelsystems verändert. Den unterscheidbaren Stufen des Ausmaßes der Betätigung kann dann außerdem ein unterschiedliches Ausmaß der Veränderung der Setzgeschwindigkeit zugeordnet sein. Dies muss jedoch - abweichend von der Erfindung gemäß den vorliegenden Patentansprüchen - nicht notwendigerweise der Fall sein. Es kann beispielsweise auch bei zwei unterscheidbaren Stufen des Ausmaßes der Betätigung beiden Stufen dasselbe Ausmaß der Veränderung der Setzgeschwindigkeit zugeordnet sein. Jedoch wird bei Betätigung im Ausmaß der ersten Stufe langsam bzw. weich auf die veränderte Setzgeschwindigkeit geregelt, während bei Betätigung im Ausmaß der zweiten Stufe schnell bzw. steif auf die veränderte Setzgeschwindigkeit geregelt wird. Der Fahrer kann somit je nach Ausmaß der Betätigung wahlweise ein komfortableres oder ein sportlicheres Beschleunigungs- bzw. Entschleunigungsverhalten des Kraftfahrzeugs vorgeben.

Im Hinblick auf die Entschleunigung des Fahrzeugs kann die Bedienlogik besonders vorteilhaft so ausgeführt werden, dass eine Betätigung im Ausmaß einer ersten Stufe lediglich dazu führt, dass das Kraftfahrzeug ausschließlich aufgrund von Reibung und Luftwiderstand, jedoch ohne aktiven Bremseingriff, langsam seine Geschwindigkeit verringert, während eine Betätigung im Ausmaß einer zweiten Stufe einen aktiven Bremseingriff des Fahrzeugs zur Folge hat, um die Geschwindigkeit des Fahrzeugs noch schneller zu verringern als bei Betätigung im Ausmaß der ersten Stufe. Dabei kann, muss jedoch nicht notwendigerweise, die Betätigung im Ausmaß der zweiten Stufe eine betragsmäßig größere Verringerung der Setzgeschwindigkeit zur Folge haben. Wird das Ausmaß der Verringerung der Setzgeschwindigkeit in beiden Stufen gleich gewählt, unterscheiden sie sich im Wesentlichen nur darin, dass erst bei der zweiten Stufe ein aktiver Bremseingriff erfolgt.

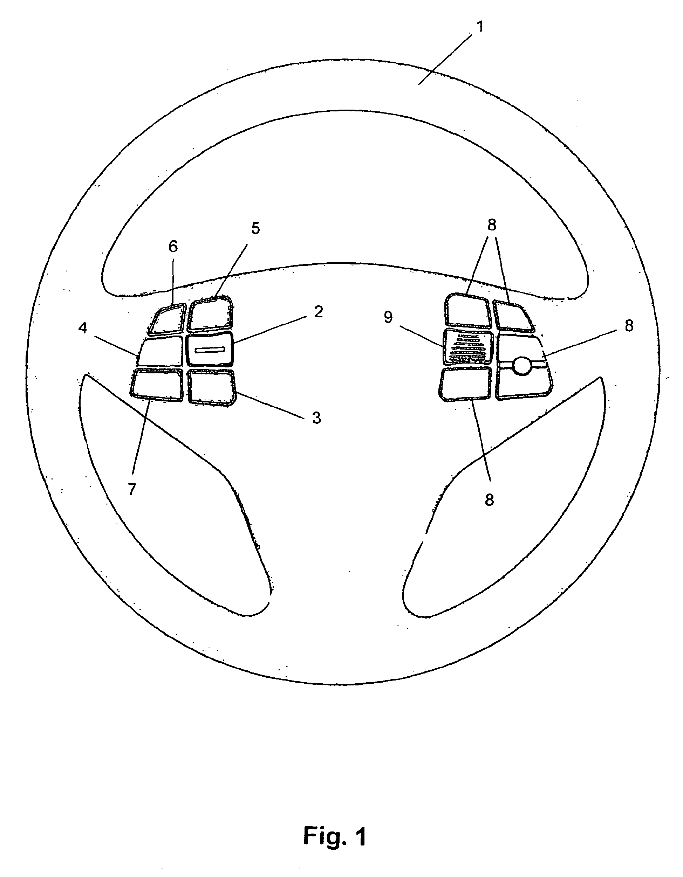

Im Folgenden wird anhand der einzigen beigefügten Zeichnung ein bevorzugtes Ausführungsbeispiel der Erfindung beschrieben. Daraus ergeben sich weitere Details, bevorzugte Ausführungsformen und Weiterbildungen der Erfindung. Es zeigt
- Fig. 1: ein Lenkrad für ein Kraftfahrzeug gemäß einer bevorzugten Ausführungsform der vorliegenden Erfindung.

Das Lenkrad 1 ist mit Bedienelementen 2 bis 7 zur Steuerung zweier verschiedener längsdynamischer Regelsysteme (konventionelle Geschwindigkeitsregelung und ACC - Adaptive Cruise Control) eines Kraftfahrzeugs ausgerüstet. Außerdem weist das Lenkrad 1 weitere Bedienelemente 8, 9 auf, die jedoch nicht zur Bedienung der längsdynamischen Regelsysteme vorgesehen sind.

Als Einstellelement im Sinne der Erfindung weist das Lenkrad 1 eine in beiden Betätigungsrichtungen zweistufig ausgeprägte Drehwippe 2 auf. Mittels dieser Drehwippe 2 ist die Setzgeschwindigkeit des aktuell aktivierten längsdynamischen Regelsystems in Einer- und Zehner-Schritten einstellbar. Zur Erhöhung der Setzgeschwindigkeit wird die Wippe 2 vom Bediener nach oben bewegt, zur Verringerung nach unten.

Eine Umschaltmöglichkeit zwischen den beiden längsdynamischen Regelsystemen ist (ähnlich einer MODE-Taste) unterhalb der Drehwippe in Gestalt der Vorwahltaste 3 vorgesehen. Die Vorwahltaste 3 kann auch derart verwendet werden, dass ihre einmalige oder mehrmalige Betätigung nicht nur zur Vorwahl, sondern auch zur umgehenden Aktivierung des jeweiligen längsdynamischen Regelsystems führt.

Die Vorwahltaste 3 kann auch besonders vorteilhaft derart aktuiert ausgeführt sein, dass die Betätigung der Taste abhängig von der aktuellen Vorwahl unterschiedliche haptische Rückmeldungen an den Bediener zur Folge hat. Alternativ oder zusätzlich kann eine Statusanzeige im Kombiinstrument des Kraftfahrzeugs oder eine Anzeige eines Head-Up-Display den Fahrer über die aktuelle Vorwahl informieren.

Ebenfalls denkbar ist die sofortige Aktivierung eines bestimmten bzw. des zuletzt vorgewählten längsdynamischen Regelsystems bei Betätigung der Drehwippe 2.

Im vorliegenden Fall ist die Aktivierung des jeweils vorgewählten längsdynamischen Regelsystems lediglich über die Ein-/Ausschalttaste 7 möglich. Die Bedienelemente zum Ein-/Ausschalten (ON/OFF, Taste 7), Setzen einer Setzgeschwindigkeit (SET, Taste 6) bzw. Abrufen der zuletzt gesetzten und gespeicherten Setzgeschwindigkeit (RESUME, Taste 4) sind im vorliegenden Fall gezielt in einer separaten Spalte angeordnet. Auch eine Betätigung der Tasten 4 und 6 bezieht sich jeweils auf das aktuell vorgewählte längsdynamische Regelsystem.

Gemäß einer besonders vorteilhaften Ausgestaltung der Erfindung ist die RESUME-Taste 4 ähnlich der Drehwippe 2 erhaben ausgeprägt. Der Bediener findet sich dann in jeder vertikalen Spalte der Bedienelemente 2 bis 7 auch haptisch bzw. taktil zurecht. So kann ein unbeabsichtigtes Setzen bzw. Aktivieren des vorgewählten längsdynamischen Systems in Folge einer Verwechslung der Bedienelemente wirkungsvoll verhindert werden.

Eine Taste 5 zur Abstandsverstellung für das ACC-System ist "vor" bzw. oberhalb der Drehwippe 2 angeordnet und ist vorliegend als Taste ausgeführt, mit der die im System vorgesehenen Abstandsstufen durch mehrmaliges Drücken durchgeschaltet werden können. Die Taste 5 ist nur dann mit dieser Funktion hinterlegt, wenn das ACC-System durch die Vorwahltaste 3 vorgewählt ist.

Unter anderem weil die bei dem Kraftfahrzeug vorgesehenen längsdynamischen Regelsysteme zum entspannten Fahren beitragen sollen, kann die Anordnung der Bedienelemente und Anzeigeelemente in dem Kraftfahrzeug gezielt darauf ausgerichtet werden, den Fahrer bei einer Steuerung des Fahrzeugs mit nur einer Hand, insbesondere alleine mit der linken Hand bestmöglich zu unterstützen. Bedienrückmeldungen bzw. Statusrückmeldungen betreffend die längsdynamischen Regelsysteme (z.B. eine Anzeige der Setzgeschwindigkeit) werden auf einer Anzeigefläche im linken Rundinstrument des Kombiinstruments des Kraftfahrzeugs ausgegeben. Hierauf abgestimmt sind die Bedienelemente 2 bis 7 für die längsdynamischen Regelsysteme bei der in Fig. 1 gezeigten Ausführungsform der Erfindung auf der linken Lenkradspeiche angeordnet.

Konsequenterweise sind die Bedienelemente 8, 9 für ausgewählte Funktionen der Informations- und Kommunikationssysteme des Kraftfahrzeugs auf der anderen Lenkradspeiche angeordnet. Zur Bedienung einer Liste (z.B. zum "Scrollen" in der Liste), die rechts im Kombiinstrument angezeigt wird, eignet sich beispielsweise ein als Dreh-/Drückrändel 9 ausgeführtes Bedienelement, das an einer Position spiegelverkehrt zur Drehwippe 2 zur Geschwindigkeitsverstellung angeordnet ist. Bedienelemente zur Umschaltung zwischen verschiedenen Listen können beispielsweise oberhalb oder unterhalb des Rändels 9 angeordnet werden. In einer weiteren Spalte können geeignete Bedienelemente zur Beeinflussung der Lautstärke oder für weitere Funktionen angeordnet werden. Damit erhält der Fahrer die Möglichkeit, auch bei ambitioniertem, beidhändigem Fahren mit der "Informations- und Kommunikationssystem-Hand" (hier seiner rechten Hand) auf wesentliche Funktionen dieser Systeme zuzugreifen. Beim entspannten Fahren lassen sich diese Funktionen wahlweise alternativ mit der gleichen Hand über entsprechende (nicht eigens grafisch dargestellte) Bedienelemente in der Mittelkonsole und/oder einem Center-Stack des Kraftfahrzeugs beeinflussen.

Zusätzlich zu den abgebildeten Bedienelementen und den beschriebenen Funktionen kann die Lenkradbedienung der längsdynamischen Regelsysteme um die Bedienung querdynamischer Funktionen erweitert werden. Es können dann alle Fahrzeugsysteme, die eine unmittelbare Rückwirkung auf die Längs- bzw. Querführung des Fahrzeugs haben, direkt über das Lenkrad bedient werden.

Das oben angegebene Ausführungsbeispiel der Erfindung bietet dem Fahrer eine Reihe von Vorteilen, die bei aus dem Stand der Technik bekannten Systemen nicht bestehen. Hierzu gehört eine eindeutige und konsequente Trennung - umgesetzt durch Anordnung auf unterschiedlichen Lenkradspeichen - zwischen Bedienelementen zu Funktionen, welche in direktem Bezug zur Fahraufgabe stehen, wie etwa Fahrerassistenzsystemen (z.B. Tempomat, ACC), und tertiären Funktionen, wie etwa der Lautstärkenverstellung oder der Auswahl einer Audioquelle. Hierzu gehört auch eine direkte räumliche Zuordnung bzw. Aufeinanderabstimmung von Bedienelementen und Anzeigeelementen bzw. Anzeigeflächen. Ebenfalls gehört hierzu das Vorsehen einer Drehwippe als Einstellelement für Setzgeschwindigkeiten, durch welches im vorliegenden Fall alleine acht verschiedene Bedienkommandos (Geschwindigkeit erhöhen/verringern in Einer-/Zehner-Schritt bezogen auf zwei verschiedene längsdynamische Regelsysteme) erzeugbar sind. Schließlich gehört hierzu die Erweiterbarkeit der Bedienung von Fahrerassistenzsystemen durch ein einsehbares und haptisch codierbares Bedienelement zur MODE-Umschaltung, beispielsweise zwischen Geschwindigkeitsregelung und Abstandsregelung.

## Patentansprüche

1. Lenkrad (1) für ein Kraftfahrzeug mit Bedienelementen (2, 3, 4, 5, 6, 7) zur Steuerung zumindest eines längsdynamischen Regelsystems des Kraftfahrzeugs,
bei welchem die Bedienelemente zur Veränderung eines Setzgeschwindigkeitswerts für das zumindest eine längsdynamische Regelsystem ein Einstellelement (2) umfassen, welches in zwei entgegengesetzten Betätigungsrichtungen betätigbar ist, um durch die Betätigungsrichtung eine Richtung der Veränderung des Setzgeschwindigkeitswerts vorzugeben, und welches in jeder der beiden Betätigungsrichtungen hinsichtlich des Ausmaßes der Betätigung in zumindest zwei Stufen betätigbar ist, um durch das Ausmaß der Betätigung ein Ausmaß der Veränderung des Setzgeschwindigkeitswerts vorzugeben und
bei welchem die an dem Lenkrad angeordneten Bedienelemente zumindest ein getrennt von dem Einstellelement ausgeführtes Vorwahlelement (3) zur Vorwahl eines von mehreren längsdynamischen Regelsystemen des Kraftfahrzeugs oder zur Vorwahl eines von mehreren Betriebsmodi eines längsdynamischen Regelsystems des Kraftfahrzeugs umfassen.

2. Lenkrad nach Anspruch 1,
**dadurch gekennzeichnet,**
**dass** einem größeren Ausmaß der Betätigung ein größeres Ausmaß der Veränderung des Setzgeschwindigkeitswerts zugeordnet ist.

3. Lenkrad nach einem der Ansprüche 1 oder 2,
**dadurch gekennzeichnet,**
**dass** zumindest zwei Stufen des Ausmaßes der Betätigung unterschiedliche Reglereinstellungen des längsdynamischen Regelsystems zugeordnet sind.

4. Lenkrad nach einem der Ansprüche 1 bis 3,
**dadurch gekennzeichnet,**
**dass** zumindest zwei Stufen des Ausmaßes der Betätigung unterschiedliche Einstellungen hinsichtlich des Einsatzes der Bremsen des Kraftfahrzeugs zugeordnet sind.

5. Lenkrad nach einem der Ansprüche 1 bis 4,
**dadurch gekennzeichnet,**
**dass** das Einstellelement als in zwei Drehrichtungen jeweils mehrstufig ausgeprägte Drehwippe ausgebildet ist.

6. Lenkrad nach einem der Ansprüche 1 bis 4,
**dadurch gekennzeichnet,**
**dass** das Einstellelement als in zwei Drehrichtungen jeweils zweistufig ausgeprägte Drehwippe ausgebildet ist.

7. Lenkrad nach Anspruch 1, **dadurch gekennzeichnet,**
**dass** die Bedienelemente zumindest ein getrennt von dem Einstellelement und dem Vorwahlelement ausgeführtes weiteres Bedienelement (8, 9) zur Vornahme einer weiteren Bedieneingabe umfassen.

8. Lenkrad nach Anspruch 1, **dadurch gekennzeichnet,**
**dass** das Einstellelement und das Vorwahlelement räumlich benachbart an dem Lenkrad angeordnet sind,
**dass** das Einstellelement und das Vorwahlelement auf derselben Seite bezüglich der Mittelachse des Lenkrads angeordnet sind und
**dass** auf der anderen Seite bezüglich der Mittelachse des Lenkrads ausschließlich Eingabeelemente ohne Bezug zu einem längsdynamischen Regelsystem des Kraftfahrzeugs angeordnet sind.

9. Kraftfahrzeug mit einem Lenkrad nach einem der Ansprüche 1 bis 8.

10. Kraftfahrzeug mit einem Lenkrad nach einem der Ansprüche 1 bis 6,
**dadurch gekennzeichnet,**
**dass** bei dem Kraftfahrzeug mehrere längsdynamische Regelsysteme vorgesehen sind, die jeweils in Abhängigkeit von einem Setzgeschwindigkeitswert betreibbar sind, dass durch Betätigung des zumindest einen getrennt von dem Einstellelement ausgeführten Vorwahlelements eines der mehreren längsdynamischen Regelsysteme vorwählbar ist, und
**dass** im Fall der Vorwahl eines ersten längsdynamischen Regelsystems das Einstellelement zur Veränderung des Setzgeschwindigkeitswerts für dieses erste Regelsystem dient und
**dass** im Fall der Vorwahl eines zweiten längsdynamischen Regelsystems das Einstellelement zur Veränderung des Setzgeschwindigkeitswerts für dieses zweite Regelsystem dient.

11. Kraftfahrzeug nach Anspruch 10,
**dadurch gekennzeichnet,**
**dass** zumindest zwei längsdynamische Regelsysteme jeweils in Abhängigkeit von zumindest einer weiteren Bedieneingabe betreibbar sind und
**dass** die Bedienelemente zumindest ein getrennt von dem Einstellelement und dem Vorwahlelement ausgeführtes weiteres Bedienelement umfassen,
mittels welchem im Fall der Vorwahl des ersten längsdynamischen Regelsystems zumindest eine weitere Bedieneingabe betreffend das erste Regelsystem vornehmbar ist und
mittels welchem im Fall der Vorwahl des zweiten längsdynamischen Regelsystems zumindest eine weitere Bedieneingabe betreffend das zweite Regelsystem vornehmbar ist.

12. Kraftfahrzeug mit einem Lenkrad nach einem der Ansprüche 1 bis 6,
**dadurch gekennzeichnet,**
**dass** das zumindest eine längsdynamische Regelsystem des Kraftfahrzeugs in mehreren unterschiedlichen Betriebsmodi jeweils in Abhängigkeit von einem Setzgeschwindigkeitswert betreibbar ist,
**dass** durch Betätigung des zumindest einen getrennt von dem Einstellelement ausgeführten Vorwahlelements einer der mehreren Betriebsmodi vorwählbar ist, und dass im Fall der Vorwahl eines ersten Betriebsmodus das Einstellelement zur Veränderung des Setzgeschwindigkeitswerts für diesen ersten Betriebsmodus dient und dass im Fall der Vorwahl eines zweiten Betriebsmodus das Einstellelement zur Veränderung des Setzgeschwindigkeitswerts für diesen zweiten Betriebsmodus dient.

13. Kraftfahrzeug nach Anspruch 12, **dadurch gekennzeichnet,**
**dass** das zumindest eine längsdynamische Regelsystem in zumindest zwei unterschiedlichen Betriebsmodi jeweils in Abhängigkeit von zumindest einer weiteren Bedieneingabe betreibbar ist und
**dass** die Bedienelemente zumindest ein getrennt von dem Einstellelement und dem Vorwahlelement ausgeführtes weiteres Bedienelement umfassen,
mittels welchem im Fall der Vorwahl des ersten Betriebsmodus zumindest eine weitere Bedieneingabe betreffend den ersten Betriebsmodus vornehmbar ist und mittels welchem im Fall der Vorwahl des zweiten Betriebsmodus zumindest eine weitere Bedieneingabe betreffend den zweiten Betriebsmodus vornehmbar ist.

14. Kraftfahrzeug mit einem Lenkrad nach Anspruch 8, **dadurch gekennzeichnet,**
**dass** bei dem Kraftfahrzeug ein Kombiinstrument mit zwei auf unterschiedlichen Seiten bezüglich der Mittelachse des Kombiinstruments angeordneten Anzeigeflächen vorgesehen ist und
**dass** auf das zumindest eine längsdynamische Regelsystem bezogene optische Informationen auf derjenigen Anzeigefläche ausgegeben werden, die bezüglich der Mittelachse des Kombiinstruments auf derjenigen Seite angeordnet ist, auf der das Einstellelement und das Vorwahlelement bezüglich der Mittelachse des Lenkrads angeordnet sind.

## Claims

1. A steering wheel (1) for a motor vehicle with operating elements (2, 3, 4, 5, 6, 7) for controlling at least one longitudinally dynamic control system of the motor vehicle, wherein the operating elements comprise an adjusting element (2) to change a set speed value for the at least one longitudinally dynamic control system, said adjusting element being actuable in two opposing actuating directions in order to predetermine a direction of the change of the set speed value by means of the actuating direction, and being actuable in each of the two actuating directions with regard to the extent of the actuation in at least two stages in order to predetermine an extent of the change in the set speed value by means of the extent of the actuation and wherein the operating elements arranged on the steering wheel comprise at least one preselection element (3) configured separately from the adjusting element to preselect one of a plurality of longitudinally dynamic control systems of the motor vehicle or to preselect one of a plurality of operating modes of a longitudinally dynamic control system of the motor vehicle.

2. A steering wheel according to claim 1, **characterised in that** a greater extent of the change of the set speed value is assigned to a greater extent of the actuation.

3. A steering wheel according to either of claims 1 or 2, **characterised in that** different controller adjustments of the longitudinally dynamic control system are assigned to the at least two stages of the extent of the actuation.

4. A steering wheel according to any one of claims 1 to 3, **characterised in that** different adjustments with regard to the use of the brakes of the motor vehicle are assigned to at least two stages of the extent of the actuation.

5. A steering wheel according to any one of claims 1 to 4, **characterised in that** the adjusting element is configured as a rotary rocker, which has a multi-stage construction, in each case, in two rotational directions.

6. A steering wheel according to any one of claims 1 to 4, **characterised in that** the adjusting element is configured as a rotary rocker, which has a two-stage construction, in each case, in two rotational directions.

7. A steering wheel according to claim 1, **characterised in that** the operating elements comprise at least one further operating element (8, 9), which is configured separately from the adjusting element and the preselection element for carrying out a further operating input.

8. A steering wheel according to claim 1, **characterised in that** the adjusting element and the preselection element are arranged in a spatially adjacent manner on the steering wheel, **in that** the adjusting element and the preselection element are arranged on the same side with respect to the centre axis of the steering wheel and **in that** exclusively input elements without reference to a longitudinally dynamic control system of the motor vehicle are arranged on the other side with respect to the centre axis of the steering wheel.

9. A motor vehicle with a steering wheel according to any one of claims 1 to 8.

10. A motor vehicle with a steering wheel according to any one of claims 1 to 6, **characterised in that** provided in the motor vehicle is a plurality of longitudinally dynamic control systems, which can be operated, in each case, depending on a set speed value, **in that** by actuating the at least one preselection element configured separately from the adjusting element, one of the plurality of longitudinally dynamic control systems can be preselected, and **in that** if a first longitudinally dynamic control system is preselected, the adjusting element is used to change the set speed value for this first control system and **in that** if a second longitudinally dynamic control system is preselected, the adjusting element is used to change the set speed value for this second control system.

11. A motor vehicle according to claim 10, **characterised in that** at least two longitudinally dynamic control systems can be operated in each case depending on at least one further operating input and **in that** the operating elements comprise at least one further operating element, which is configured separately from the adjusting element and the preselection element and by means of which, if the first longitudinally dynamic control system is preselected, at least one further operating input relating to the first control system can be carried out and by means of which, if the second longitudinally dynamic control system is preselected, at least one further operating input relating to the second control system can be carried out.

12. A motor vehicle with a steering wheel according to any one of claims 1 to 6, **characterised in that** the at least one longitudinally dynamic control system of the motor vehicle can be operated in a plurality of different operating modes, in each case depending on a set speed value, **in that** by actuating the at least one preselection element configured separately from the adjusting element, one of the plurality of operating modes can be preselected, and **in that** if a first operating mode is preselected, the adjusting element is used to change the set speed value for this first operating mode and **in that** if a second operating mode is preselected, the adjusting element is used to change the set speed value for this second operating mode.

13. A motor vehicle according to claim 12, **characterised in that** at least one longitudinally dynamic control system can be operated in at least two different operating modes, in each case depending on at least one further operating input, and **in that** the operating elements comprise at least one further operating element, which is configured separately from the adjusting element and the preselection element and by means of which, if the first operating mode is preselected, at least one further operating input relating to the first operating mode can be carried out and by means of which, if the second operating mode is preselected, at least one further operating input can be carried out relating to the second operating mode.

14. A motor vehicle with a steering wheel according to claim 8, **characterised in that** an instrument cluster with two display faces arranged on different sides with respect to the centre axis of the instrument cluster is provided in the motor vehicle and **in that** optical information with respect to the at least one longitudinally dynamic control system is output on that display face which is arranged, with respect to the centre axis of the instrument cluster, on the side on which the adjusting element and the preselection element are arranged with respect to the centre axis of the steering wheel.

## Revendications

1. Volant de direction (1) de véhicule automobile comportant des éléments de commande (2, 3, 4, 5, 6, 7) pour commander au moins un système de régulation de la dynamique longitudinale du véhicule, dans lequel :
- les éléments de commande comportent au moins un élément de réglage (2) pour modifier la valeur de la vitesse de consigne pour au moins un système de régulation de la dynamique longitudinale,
* cet élément pouvant être actionné dans deux directions d'actionnement opposées pour prédéfinir par la direction d'actionnement, le sens de la variation de la valeur de la vitesse de consigne, et
- dans chacune des deux directions d'actionnement, il peut être commandé au moins suivant deux niveaux pour le degré de l'actionnement, pour prédéfinir par le degré de l'actionnement, le degré de la variation de la vitesse de consigne, et
- les éléments de commande installés sur le volant de direction, comportent au moins un élément de présélection (3) réalisé séparément de l'élément de réglage pour présélectionner l'un des différents systèmes de régulation de la dynamique longitudinale du véhicule automobile ou pour présélectionner l'un des différents modes de fonctionnement d'un système de régulation de la dynamique longitudinale du véhicule automobile.

2. Volant de direction selon la revendication 1,
**caractérisé en ce qu'**
un degré important de variation de la valeur de la vitesse de consigne est associé à un degré important d'actionnement.

3. Volant de direction selon la revendication 1 ou 2,
**caractérisé en ce qu'**
au moins deux niveaux du degré d'actionnement sont associés à des installations de régulation différentes du système de régulation de la dynamique longitudinale.

4. Volant de direction selon l'une des revendications 1 à 3,
**caractérisé en ce qu'**
au moins deux niveaux du degré d'actionnement correspondent à des réglages différents de la mise en oeuvre des freins du véhicule.

5. Volant de direction selon l'une des revendications 1 à 4,
**caractérisé en ce que**
l'élément de réglage est un curseur rotatif à plusieurs niveaux dans les deux sens de rotation.

6. Volant de direction selon l'une des revendications 1 à 4,
**caractérisé en ce que**
l'élément de réglage est un curseur rotatif avec deux niveaux pour chaque fois deux sens de rotation.

7. Volant de direction selon la revendication 1,
**caractérisé en ce que**
les éléments de manoeuvre comportent au moins un autre élément de manoeuvre (8, 9) distinct de l'élément de réglage et de l'élément de présélection pour assurer une autre fonction.

8. Volant de direction selon la revendication 1,
**caractérisé en ce que**
- l'élément de réglage et l'élément de présélection, sont installés au voisinage l'un de l'autre sur le volant,
- l'élément de réglage et l'élément de présélection sont installés du même côté par rapport à l'axe médian du volant, et
- sur l'autre côté par rapport à l'axe médian du volant, il y a uniquement des éléments d'entrée non associés à un système de régulation de la dynamique longitudinale du véhicule.

9. Véhicule automobile équipé d'un volant de direction selon l'une des revendications 1 à 8.

10. Véhicule automobile comportant un volant de direction selon l'une des revendications 1 à 6,
**caractérisé en ce que**
plusieurs systèmes de régulation de la dynamique longitudinale, sont associés au véhicule automobile,
- ces systèmes fonctionnent différemment selon la vitesse de consigne,
- par l'actionnement d'au moins un élément de présélection séparé de l'élément de réglage, on peut présélectionner un ou plusieurs des systèmes de régulation de la dynamique longitudinale, et
- dans le cas de la présélection d'un premier système de régulation de la dynamique longitudinale, l'élément de réglage permet de modifier la valeur de la vitesse de consigne pour ce premier système de régulation, et
- dans le cas de la présélection d'un second système de régulation de la dynamique longitudinale, l'élément de réglage sert à modifier la valeur de la vitesse de consigne pour ce second système de régulation.

11. Véhicule automobile selon la revendication 10,
**caractérisé en ce qu'**
- au moins deux systèmes de régulation de la dynamique longitudinale sont mis en oeuvre chaque fois en fonction d'au moins une autre entrée de service, et
- les éléments de manoeuvre comportent au moins un autre élément de manoeuvre distinct de l'élément de réglage et de l'élément de présélection et avec lequel,
* en cas de présélection du premier système de régulation à dynamique longitudinale, on réalise au moins une autre entrée de service concernant le premier système de régulation, et
* dans le cas de la présélection du second système de régulation de la dynamique longitudinale, on réalise au moins une autre entrée de service concernant le second système de régulation.

12. Véhicule automobile équipé d'un volant de direction selon l'une des revendications 1 à 6,
**caractérisé ce qu'**
au moins un système de régulation de la dynamique longitudinale du véhicule automobile est prévu pour différents modes de fonctionnement en fonction chaque fois d'une valeur de la vitesse de consigne,
- par l'actionnement d'au moins un élément de présélection différent de l'élément de réglage, on peut présélectionner l'un des différents modes de fonctionnement, et
- dans le cas de la présélection d'un premier mode de fonctionnement, l'élément de réglage sert à modifier la valeur de la vitesse de consigne dans ce premier mode de fonctionnement, et
- dans le cas de la présélection d'un second mode de fonctionnement, l'élément de réglage sert à modifier la valeur de la vitesse de consigne de ce second mode de fonctionnement.

13. Véhicule automobile selon la revendication 12,
**caractérisé en ce qu'**
au moins un système de régulation de la dynamique longitudinale est prévu pour fonctionner dans au moins deux modes différents de fonctionnement, chaque fois en fonction d'au moins une autre entrée de manoeuvre, et
- les éléments de manoeuvre comportent au moins un autre élément de manoeuvre séparé de l'élément de réglage et de l'élément de présélection, à l'aide duquel
* en cas de présélection du premier mode de fonctionnement, on prédéfinit au moins une autre entrée de manoeuvre concernant le premier mode de fonctionnement, et
* en cas de présélection du second mode de fonctionnement, on réalise au moins une autre entrée de manoeuvre concernant le second mode de fonctionnement.

14. Véhicule automobile équipé d'un volant de direction selon la revendication 8,
**caractérisé en ce que**
le véhicule comporte un instrument combiné avec deux surfaces d'affichage sur les côtés différents par rapport à l'axe central de l'instrument combiné, et
- des informations optiques concernant au moins un système de régulation de la dynamique longitudinale, sont fournies sur la surface d'affichage qui se trouve, par rapport à l'axe médian de l'instrument combiné, sur le côté correspondant à l'élément de réglage et à l'élément de présélection, par rapport à l'axe central du volant de direction.
